# EUROPEAN PATENT APPLICATION

(11) **EP 2 658 110 A2**
(43) Date of publication of application: **30.10.2013**
(21) Application number: 12275120.9
(22) Date of filing: 21.08.2012
(51) Int. Cl.: H02M 3/335

(54) **Power supplying apparatus, method of operating the same, and solar power generation system including the same**

(30) Priority: 27.04.2012 KR 20120044837
(71) Applicant: Samsung Electro-Mechanics Co., Ltd, Suwon, Gyunggi-Do (KR); Industry Foundation Of Chonnam National University, Buk-gu Gwangju-city (KR)
(72) Inventor: Lee, Tae Won, Gyunggi-do (KR); Heo, Min Ho, Gyunggi-do (KR); Park, Sung Jun, Gwangju (KR); Kim, Seung Ae, Gwangju (KR)
(74) Representative: Potter Clarkson LLP

(57) **Abstract**

There are provided a power supplying apparatus, a method of operating the same, and a solar power generation system including the same. The power supplying apparatus includes: a power supply unit generating a direct current (DC) input signal; a main circuit unit including a plurality of flyback converter circuits connected to the power supply unit to generate a DC output signal; and a control circuit unit controlling an operation of the main circuit unit, wherein the control circuit unit connects the plurality of flyback converter circuits to each other in series or in parallel according to a level of the DC input signal. Therefore, even in the case in which the level of the DC input signal is high, a circuit may be configured using a circuit device having a low withstand voltage range and damage and deterioration of the circuit device may be prevented.

## Description

### CROSS-REFERENCE TO RELATED APPLICATIONS

This application claims the priority of Korean Patent Application No. 10-2012-0044837 filed on April 27, 2012, in the Korean Intellectual Property Office, the disclosure of which is incorporated herein by reference.

### BACKGROUND OF THE INVENTION

### Field of the Invention

The present invention relates to a power supplying apparatus capable of generating a direct current (DC) output signal by converting a high level DC input signal without increasing a withstand voltage of a circuit device having a DC to DC converting circuit, a method of operating the same, and a solar power generation system including the same.

### Description of the Related Art

Recently, as green technology has emerged as an important issue in a range of industries, research into environmentally-friendly energy generation in which carbon-based energy is not used has been actively conducted. Solar power generation has been prominent as a leading technique within the field of environmentally-friendly energy generation. In particular, research into methods for increasing the efficiency of a solar power generation cell generating energy from solar rays and methods for increasing efficiency in a circuit required when energy generated by a solar power generation cell is converted into energy suitable for home or industrial purposes has been actively conducted.

The circuit connected to the solar power generation cell should be designed to have circuit devices having a high withstand voltage in consideration of operating characteristics of the solar power generation cell outputting a high level direct current (DC) signal. Particularly, in the case of implementing a DC to DC converting circuit with a flyback converter, an operating condition of a switching device that requires a high withstand voltage may act as a significantly large limitation in selecting the switching device, and cause an increase in overall circuit costs.

Particularly, in the case of implementing a switched-mode power supply (SMPS) circuit using a solar power generation system, the circuit should be configured using a switching device having a withstand voltage in a range 1.5 to 2 times higher than an input voltage level. Therefore, in order to be applied to a solar power generation system generating a DC voltage having a high level, a switching device having a withstand voltage higher than a voltage level output in the solar power generation system should be used, which has been problematic in terms of price competitiveness and circuit design.

In the following Related Art Documents, Patent Document 1 has disclosed a DC to DC converting circuit including flyback converters. However, in Patent Document 1, a configuration of selectively connecting primary windings of the flyback converters to each other in series or in parallel is not disclosed. Patent Document 2 has disclosed a plurality of DC to DC converter circuits. However, in Patent Document 2, only a configuration of balancing currents flowing in each converter circuit is disclosed, and a configuration capable of allowing for a series or a parallel connection is not disclosed.

### [Related Art Document]

(Patent Document 1) US Patent No. US 5,844,787
(Patent Document 2) Japanese Patent Laid-Open Publication No. JP 2006-042474

### SUMMARY OF THE INVENTION

An aspect of the present invention provides a power supplying apparatus capable of effectively direct current (DC) to DC converting a high level output signal output by a solar power generation cell without a switching device having a high withstand voltage and other circuit devices by selecting a scheme in which primary windings included in a plurality of flyback converter circuits are connected in series or in parallel, according to a level of a DC input signal, a method of operating the same, and a solar power generation system including the same.

According to an aspect of the present invention, there is provided a power supplying apparatus including: a power supply unit generating a direct current (DC) input signal; a main circuit unit including a plurality of flyback converter circuits connected to the power supply unit to generate a DC output signal; and a control circuit unit controlling an operation of the main circuit unit, wherein the control circuit unit connects the plurality of flyback converter circuits to each other in series or in parallel according to a level of the DC input signal.

The control circuit unit may include a series/parallel circuit converting unit for connecting the plurality of flyback converter circuits to each other in series or in parallel.

The control circuit unit may compare a withstand voltage range of a plurality of circuit devices included in the plurality of flyback converter circuits with the level of the DC input signal and connect the plurality of flyback converter circuits to each other in series when the level of the DC input signal is higher than a maximum value of the withstand voltage range.

The control circuit unit may connect the plurality of flyback converter circuits to each other in parallel when the level of the DC input signal is lower than the maximum value of the withstand voltage range.

The plurality of flyback converter circuits may include a plurality of primary windings and at least one secondary winding.

At least part of the plurality of primary windings may have the same amount of turns.

The plurality of flyback converter circuits may be controlled to be current balanced by the at least part of the plurality of primary windings having the same amount of turns.

At least one of the plurality of primary windings may be operated as a power circuit for executing voltage and current control operations based on the controlling of the control circuit unit and a voltage and a current of a sum signal of DC output signals output from the plurality of flyback converter circuits.

According to another aspect of the present invention, there is provided a method of operating a power supplying apparatus, the method including: detecting a level of a DC input signal; comparing the level of the DC input signal with a withstand voltage range of a plurality of circuit devices included in a plurality of flyback converter circuits; and generating a DC output signal by connecting the plurality of flyback converter circuits to each other in series or in parallel according to a comparison result.

In the generating of the DC output signal, the plurality of flyback converter circuits may be connected to each other in series when the level of the DC input signal is higher than a maximum value of the withstand voltage range of the circuit devices, thereby generating the DC output signal.

In the generating of the DC output signal, the plurality of flyback converter circuits may be connected to each other in parallel when the level of the DC input signal is lower than a maximum value of the withstand voltage range of the circuit devices, thereby generating the DC output signal.

The DC output signal may correspond to a sum signal of a plurality of output signals output from the plurality of flyback converter circuits.

The plurality of output signals output from the plurality of flyback converter circuits may be controlled to be current balanced by a plurality of primary windings included in the plurality of flyback converter circuits having the same amount of turns.

In the generating of the DC output signal, the plurality of flyback converter circuits may be connected to each other in series or in parallel by a power signal supplied by at least one of a plurality of primary windings included in the plurality of flyback converter circuits, thereby generating the DC output signal.

According to another aspect of the present invention, there is provided a solar power generation system including: a power converter receiving a PV signal generated by a solar cell array including at least one solar cell as an input signal to generate an output signal; a controller controlling an operation of the power converter based on at least one of a voltage and a current of the input signal and a voltage and a current of the output signal; and a power supplier generating power for operating the controller, wherein the power supplier includes a main circuit unit including a plurality of flyback converter circuits generating a DC output signal from the PV signal and a control circuit unit controlling an operation of the main circuit unit, the control circuit unit connects the plurality of flyback converter circuits to each other in series or in parallel according to a level of the PV signal.

The power supplier may connect the plurality of flyback converter circuits to each other in series when the level of the PV signal is higher than a maximum value of a withstand voltage range of switching devices included in the plurality of flyback converter circuits.

The power supplier may connect the plurality of flyback converter circuits to each other in parallel when the level of the PV signal is lower than a maximum value of a withstand voltage range of switching devices included in the plurality of flyback converter circuits.

The plurality of flyback converter circuits may include a transformer having a plurality of primary windings and at least one secondary winding, and at least part of the plurality of primary windings may have the same amount of turns.

The plurality of flyback converter circuits may be controlled to be current balanced by the at least part of the plurality of primary windings having the same amount of turns.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram illustrating a power supplying apparatus according to an embodiment of the present invention;
FIG. 2 is a circuit diagram illustrating a power supplying apparatus according to an embodiment of the present invention;
FIG. 3 is a flowchart illustrating a method of operating a power supplying apparatus according to an embodiment of the present invention;
FIGS. 4A and 4B are graphs illustrating a method of operating a power supplying apparatus according to an embodiment of the present invention; and
FIG. 5 is a block diagram schematically illustrating a solar power generation system according to an embodiment of the present invention.

### DETAILED DESCRIPTION OF THE INVENTION

Embodiments of the present invention will be described in detail with reference to the accompanying drawings. These embodiments will be described in detail to allow those skilled in the art to practice the present invention. It should be appreciated that various embodiments of the present invention are different but are not necessarily exclusive. For example, specific shapes, configurations, and characteristics described in an embodiment of the present invention may be implemented in another embodiment without departing from the spirit and the scope of the present invention. In addition, it should be understood that positions and arrangements of individual components in each disclosed embodiment may be changed without departing from the spirit and the scope of the present invention. Therefore, a detailed description described below should not be construed as being restrictive. In addition, the scope of the present invention is defined only by the accompanying claims and their equivalents if appropriate. Similar reference numerals will be used to describe the same or similar functions throughout the accompanying drawings.

Hereinafter, embodiments of the present invention will be described in detail with reference to the accompanying drawings so that those skilled in the art may easily practice the present invention.

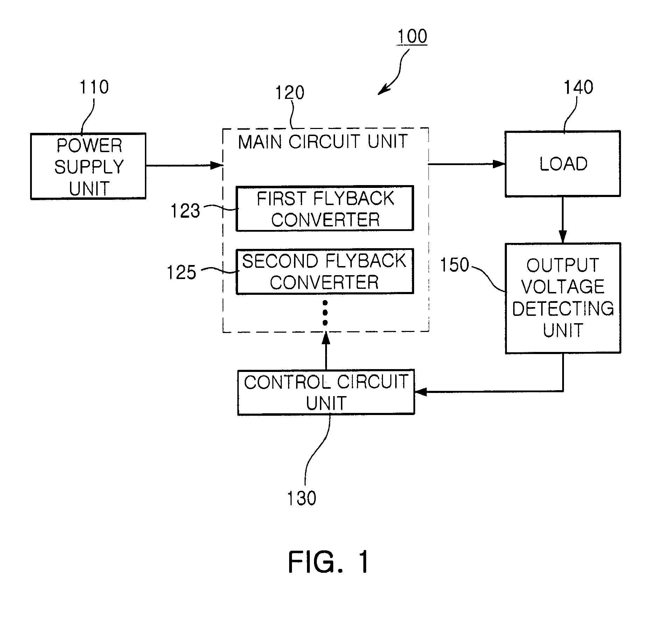

FIG. 1 is a block diagram illustrating a power supplying apparatus according to an embodiment of the present invention.

Referring to FIG. 1, a power supplying apparatus 100 according to the present embodiment may include a power supply unit 110, a main circuit unit 120, including a plurality of flyback converters 123 and 125, a control circuit unit 130, a load 140, and an output voltage detecting unit 150. The power supply unit 110 may generate an input voltage having a level of several hundreds of volts to supply the generated voltage to the main circuit unit 120. For example, the input voltage generated by the power supply unit 110 may have a very high level of several hundreds to several thousands of volts or more.

The main circuit unit 120 may include a converter circuit for direct current (DC) to DC conversion. As an example, the converter circuit included in the main circuit unit 120 may be the flyback converters 123 and 125. The main circuit unit 120 may DC to DC convert the high level input voltage generated by the power supply unit 110 into a low level output voltage. The output voltage generated by the main circuit unit 120 may be applied to the load 140, and the output voltage detecting unit 150 connected to the load 140 may detect a level of the output voltage. The control circuit unit 130 connected to the main circuit unit 120 may control an operation of the main circuit unit 120. The plurality of flyback converters 123 and 125 included in the main circuit unit 120 may be connected to each other in series. The plurality of flyback converters 123 and 125 may be connected to each other in series to prevent damage and deterioration of circuit devices each included in the flyback converters 123 and 125 even in the case in which a withstand voltage of the circuit devices is lower than a level of the input voltage generated by the power supply unit 110. In addition, the circuit device having the low withstand voltage is used, whereby price competitiveness and a degree of freedom in a circuit design may increase. Alternatively, as another example, the control circuit unit 130 may select a scheme of connecting the plurality of flyback converters 123 and 125 included in the main circuit unit 120 in series or in parallel.

The plurality of flyback converters 123 and 125 may include a transformer and be operated as a DC to DC converting circuit by charging energy in a primary winding of the transformer by a turning-on or a turning-off operation of a switching device connected to the primary winding and transferring the charged energy to a secondary winding. The plurality of flyback converters 123 and 125 may include various circuit devices including the switching device controlling a DC to DC converting operation, and the individual circuit devices have a withstand voltage range capable of withstanding any voltage without damage or performance deterioration as unique characteristics. Therefore, in order to apply a high input voltage and then convert the high input voltage into a desired output voltage, the flyback converters 123 and 125 need to be configured using circuit devices having a maximum withstand voltage higher than the input voltage.

As described above, the input voltage output by the power supply unit 110 may have a high level of several hundreds to several thousands of volts or more. As a result, in consideration of a margin of a circuit design, the flyback converters 123 and 125 need to be configured using circuit devices having a withstand voltage range higher than the input voltage of several hundreds to several thousands of volts, which may cause a large burden in terms of costs. Therefore, in the present embodiment, a method of configuring the plurality of flyback converters 123 and 125 using circuit devices having a withstand voltage range lower than a maximum level of the input voltage by connecting the plurality of flyback converters 123 and 125 to each other in series or in parallel according to the level of the input voltage is suggested. A control signal for connecting the plurality of flyback converters 123 and 125 to each other in series or in parallel may be generated by the control circuit unit 130.

To this end, the control circuit unit 130 may include a series/parallel connection selector, a series/parallel connection signal generator, and the like, for connecting the plurality of flyback converters 123 and 125 to each other in series or in parallel. The control circuit unit 130 may receive the level of the input voltage, the level of the output voltage, and the like, in order to select the scheme of connecting the plurality of flyback converters 123 and 125 in series or in parallel. A signal output by the main circuit unit 120 may be applied to the load 140, and the power supplying apparatus 100 according to the present embodiment may include a separate output voltage detecting unit 150 in order to provide the output voltage to the control circuit unit 130.

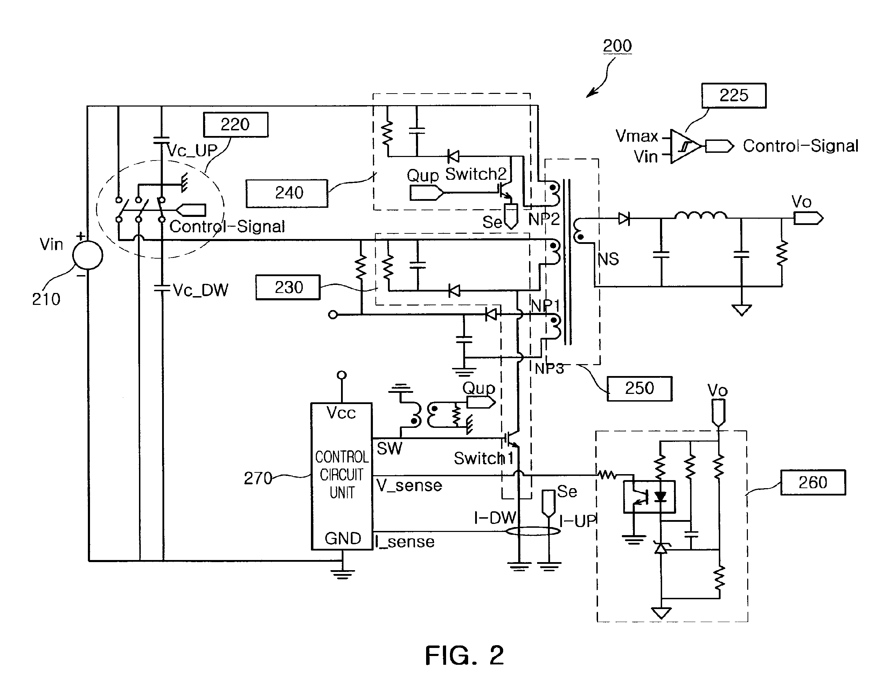

FIG. 2 is a circuit diagram illustrating a power supplying apparatus according to an embodiment of the present invention.

Referring to FIG. 2, a power supplying apparatus 200 according to the present embodiment may include a power supply unit 210, a series/parallel circuit converting unit 220, flyback converter circuits 230 and 240, a transformer 250, an output voltage detecting unit 260, a control circuit unit 270, and the like. The power supply unit 210 may output input power having DC characteristics, and the input power output by the power supply unit 210 may be divided into voltages of Vc_UP and Vc_DW by capacitors connected to each other in series.

The voltages Vc_UP and Vc_DW divided by the capacitors may be applied to the flyback converters 230 and 240, respectively, as input voltages. FIG. 2 shows the case in which the voltage Vc_DW is applied to the first flyback converter 230 and the voltage Vc_UP is applied to the second flyback converter 240 by way of example. The first and second flyback converters 230 and 240 may be respectively connected to primary windings NP1 and NP2 of the transformer 250, and include transistors as switching devices Switch 1 and Switch 2 for controlling an operation thereof. Since an operating principle of the first and second flyback converters 230 and 240 is not largely different from that of a general flyback converter circuit, a detailed description thereof will not be provided in the present embodiment.

Turn-on and turn-off operations of the switching devices Switch 1 and Switch 2 of the respective flyback converters 230 and 240 may be determined by switching signals SW and Qup output by the control circuit unit 270. The control circuit unit 270 may be implemented by an integrated circuit (IC) driven by an operating voltage Vcc, and generate a first switching signal SW and output the generated first switching signal SW to the switching device Switch 1 of the first flyback converter 230 as shown in FIG. 2. In addition, a second switching signal Qup for controlling turn-on and turn-off of the switching device Switch 2 of the second flyback converter 240 using the first switching signal SW may be generated.

The control circuit unit 270 may receive an output voltage Vo generated by the flyback converters 230 and 240 and the transformer 250 and fed-back through a terminal thereof and currents I-DW and I-UP flowing through the switching devices Switch 1 and Switch 2 of the flyback converters 230 and 240 and fed-back through a terminal thereof. FIG. 2 shows the case in which the output voltage Vo detected by the output voltage detecting unit 260 is fed back through a V_Sense terminal of the control circuit unit 270 and the currents I-DW and I-UP are fed back through an I_Sense terminal thereof.

Meanwhile, according to the embodiment of the present invention, the plurality of flyback converters 230 and 240 may be connected to each other in series or in parallel. To this end, the series/parallel circuit converting unit 220 may be provided between the power supply unit 210 and the flyback converters 230 and 240. Referring to FIG. 2, the series/parallel circuit converting unit 220 may include a plurality of switching devices, and turn-on and turn-off of the switching devices may be determined by a control signal Control_Signal. The control signal Control_Signal determining the turn-on and turn-off of the switching device included in the series/parallel circuit converting unit 220 may be generated by a series/parallel circuit selector 225.

The series/parallel circuit selector 225 may include a comparator circuit. The comparator circuit may compare a DC input signal Vin output by the power supply unit 210 with a maximum value Vmax of a withstand voltage of the circuit devices of the flyback converters 230 and 240, and generate the control signal Control_Signal for determining the turn-on and turn-off of the switching devices included in the series/parallel circuit converting unit 220 according to a comparison result. The series/parallel circuit selector 225 may be included in the control circuit unit 270 or an operation of the series/parallel circuit selector 225 may be controlled by the control circuit unit 270.

As a comparison result between the DC input signal Vin and the maximum value Vmax of the withstand voltage of the circuit device performed by the series/parallel circuit selector 225, when it is determined that the DC input signal Vin is higher than the maximum value Vmax of the withstand voltage of the circuit device, the series/parallel circuit selector 225 may output the control signal Control_Signal controlling the flyback converters 230 and 240 to be connected to each other in series. The series/parallel circuit converting unit 220 may connect the flyback converters 230 and 240 to each other in series by the control signal Control_Signal output by the series/parallel circuit selector 225.

FIG. 2 shows the case in which the flyback converters 230 and 240 are connected to each other in series. When switches included in the series/parallel circuit converting unit 220 connected between the DC input signal Vin and input terminals of the flyback converters are sequentially numbered 1 to 3 from the left, switches 1 and 2 may be turned off and switch 3 may be turned on in order to connect the flyback converters 230 and 240 to each other in series. Therefore, the voltage of the DC input signal Vin may be divided into two voltages corresponding to Vin/2 and then applied to the input terminals of the flyback converters 230 and 240. Since the flyback converters 230 and 240 are connected to each other in series, currents flowing in the respective flyback converters 230 and 240 are the same as each other.

For example, when it is assumed that the voltage of the DC input signal Vin has a level of DC 900 V and the maximum value Vmax of the withstand voltage of the circuit device of the respective flyback converters 230 and 240 is 500 V, the DC input signal Vin is higher than the maximum value Vmax of the withstand voltage of the circuit device. Therefore, when the DC input signal Vin is applied to the respective flyback converters 230 and 240, the DC input signal Vin exceeding a withstand voltage range of the circuit device is applied, such that the flyback converters 230 and 240 may be damaged.

However, when the flyback converters 230 and 240 are connected to each other in series as suggested in the embodiment of the present invention, a voltage level of the DC input signal Vin having a level of 900 V may be divided into two voltages of 450 V, half of 900V, such that two divided voltages are respectively applied to the input terminals of the flyback converters 230 and 240. That is, since the first flyback converter 230 and the second flyback converter 240 have the divided DC input voltage of 450 V applied thereto, the circuit device having a maximum value of a withstand voltage of 500 V may be operated normally, without being damaged. In addition, since the power supplying apparatus 200 may be implemented using the circuit device having a withstand voltage lower than a maximum value of the DC input signal Vin, an increase in costs may be prevented and design conditions and limitations may be alleviated.

On the contrary, as a comparison result between the DC input signal Vin and the maximum value Vmax of the withstand voltage of the circuit device performed by the series/parallel circuit selector 225, when it is determined that the DC input signal Vin is lower than the maximum value Vmax of the withstand voltage of the circuit device, the series/parallel circuit selector 225 may output the control signal Control_Signal controlling the flyback converters 230 and 240 to be connected to each other in parallel. In the series/parallel circuit converting unit 220 of FIG. 2, in the case in which switch 1 and switch 2 are turned on and switch 3 is turned off, the flyback converters 230 and 240 may be connected to each other in parallel. Therefore, the voltage of the DC input signal Vin may be applied to the input terminals of the respective flyback converters 230 and 240 and a current output by the DC input signal Vin may be divided into two currents, levels of which respectively corresponding to half of the current, and then input to the respective flyback converters 230 and 240.

For example, when it is assumed that the DC input signal is 450 V and the maximum value Vmax of the withstand voltage of the circuit device of the respective flyback converters 230 and 240 is 500 V, even in the case that the DC input signal Vin is applied to the flyback converters 230 and 240 as is, there is no risk that the circuit device will be damaged. Therefore, the turn-on and turn-off of the switches of the series/parallel circuit converting unit 220 may be selected so that the DC input signal Vin having a level of 450 V is applied to the flyback converters 230 and 240 connected to each other in parallel.

An operation of the switches of the series/parallel circuit converting unit 220 for connecting the flyback converters 230 and 240 to each other in series or in parallel will be described once again. Hereinafter, for convenience of explanation, the switches included in the series/parallel circuit converting unit 220 are sequentially defined as first to third switches from the left in FIG. 2.

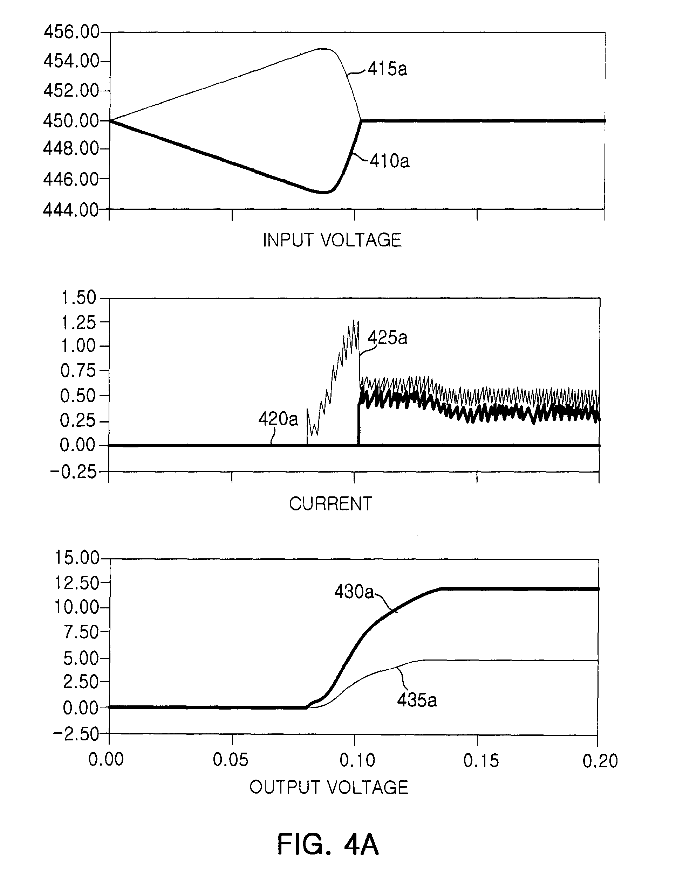

As shown in FIG. 2, in the case in which the first and second switches are turned off and the third switch is turned on to be closed, the DC input signal Vin may be distributed to the capacitors connected to each other in series, such that Vc_UP and Vc_DW are applied to the flyback converters 230 and 240. Therefore, the case of FIG. 2 in which only the third switch is in a closed state may correspond to the case in which the first and second flyback converters 230 and 240 are connected to each other in series. The first and second flyback converters 230 and 240 may receive voltages corresponding to Vc_UP and Vc_DW from the capacitors and convert the voltages to generate an output signal Vo. Here, auto-balancing of the voltage may be accomplished by leakage inductance generated in the primary windings NP1 and NP2 of the transformer 250, included in the respective flyback converters 230 and 240. A description thereof will be provided below with reference to FIG. 4A.

Meanwhile, according to the present embodiment, turn-on and turn off timings of the switching devices Switch 1 and Switch 2 included in the respective flyback converters 230 and 240 are controlled to be different, whereby efficiency of the power supplying apparatus 200 may be improved. As known, the flyback converters 230 and 240 may be operated in a scheme of charging energy in the primary windings NP1 and NP2 of the transformer 250 during a period in which the switching devices Switch 1 and Switch 2 are turned on and transferring the energy charged in the primary windings NP1 and NP2 to a secondary winding NS during a period in which the switching devices Switch 1 and Switch 2 are turned off. Therefore, the operation of the power supplying apparatus 200 is controlled in a scheme of turning the switching device Switch 2 of the second flyback converter 240 off when the switching device Switch 1 of the first flyback converter 230 is turned on, whereby the efficiency of the power supplying apparatus 200 may be improved. In addition, as described above, the switching devices Switch 1 and Switch 2 are operated in an alternate switching scheme, whereby an auto-balancing condition of the current and the voltage may be satisfied.

Meanwhile, the transformer 250 may further include a third primary winding NP3, in addition to the first and second primary windings NP1 and NP2 connected to the flyback converters 230 and 240, respectively. The third primary winding NP3 included in the transformer 250 may be used to supply a power signal required for an operation of the control circuit unit 270 implemented by an integrated circuit device, the sensing of the output currents I_UP and I_DW of the respective flyback converters 230 and 240, the sensing of the output voltage of the output voltage detecting unit 260, and the like. Wherein at least part of the plurality of primary windings have the same amount of turns.

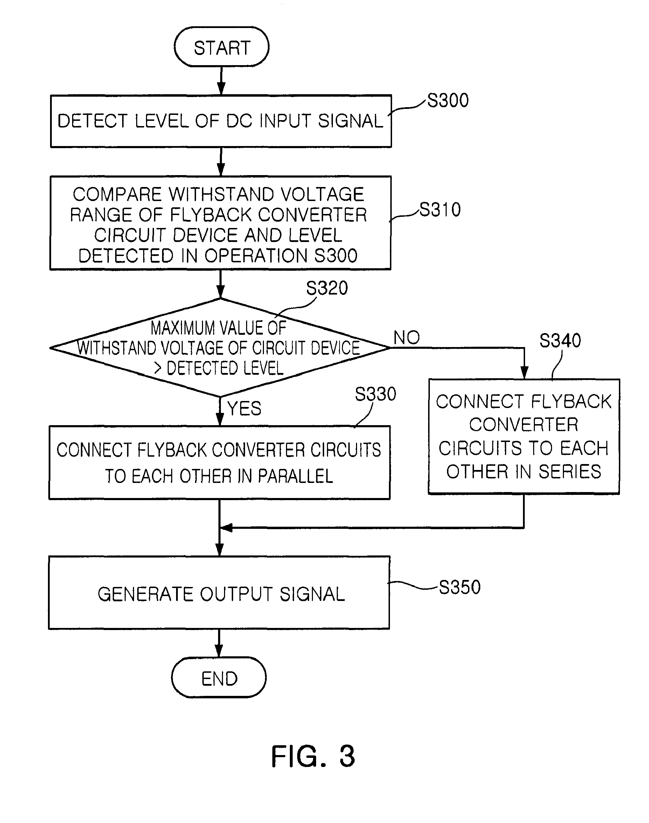

FIG. 3 is a flowchart illustrating a method of operating a power supplying apparatus according to an embodiment of the present invention.

Referring to FIG. 3, the method of operating the power supplying apparatus 200 according to the present embodiment starts with detecting a level of a DC input signal Vin (S300). The level of the DC input signal Vin generated and supplied by the power supply unit 210 is detected and transferred to the series/parallel circuit selector 225 before the DC input signal is input to the flyback converters 230 and 240, and the series/parallel circuit selector 225 compares the level of the DC input signal Vin detected in operation S300 with a withstand voltage range of the circuit devices included in the flyback converters 230 and 240 (S310). For example, as shown in FIG. 2, the series/parallel circuit selector 225 may compare the maximum value Vmax of the withstand voltage of the circuit devices included in the flyback converters 230 and 240 with the level of the DC input signal Vin.

The series/parallel circuit selector 225 determines whether or not the maximum value Vmax of the withstand voltage of the circuit device is higher than the level of the DC input signal Vin (S320). As a determination result of operation S320, when it is determined that the maximum value Vmax of the withstand voltage of the circuit device is higher than the level of the DC input signal Vin, the flyback converters 230 and 240 are connected to each other in parallel (S330). On the other hand, when it is determined that the maximum value Vmax of the withstand voltage of the circuit device is lower than the level of the DC input signal Vin, the flyback converters 230 and 240 are connected to each other in series in order to prevent damage and deterioration of the circuit device (S340).

For example, when it is assumed that the maximum value Vmax of the withstand voltage of the circuit device is 125 V and the level of the DC input signal Vin is 220 V, since the maximum value Vmax of the withstand voltage of the circuit device is lower than the level of the DC input signal Vin as a determination result of operation S320, the flyback converters 230 and 240 are connected to each other in series. The flyback converters 230 and 240 are connected to each other in series, such that the DC input signal Vin is divided into two voltages corresponding to 110 V and then applied to the flyback converters 230 and 240, respectively, whereby damage and deterioration of the circuit device may be prevented.

Contrary to the above-mentioned case, in the case in which the level of the DC input signal Vin is lower than the maximum value Vmax of the withstand voltage of the circuit device, the flyback converters 230 and 240 are connected to each other in parallel. This is due to the fact that when the DC input signal Vin is applied to the flyback converters 230 and 240 as is, the deterioration or damage to the circuit device is not an issue. As described above, the turn-on and turn-off timings of the switching devices Switch 1 and Switch 2 of the respective flyback converters 230 and 240 are controlled, preferably, the switching devices are alternatively switched, whereby the overall operational efficiency may be improved and the auto-balancing of the current and the voltage may be controlled.

When the flyback converters 230 and 240 are connected to each other in series or in parallel, an output signal Vo is generated from the DC input signal Vin (S350). The output signal Vo may be generated through the flyback converters 230 and 240 and the transformer 250, and the generated output signal Vo may be sensed by the output voltage detecting unit 260 and then fed back to the control circuit unit 270.

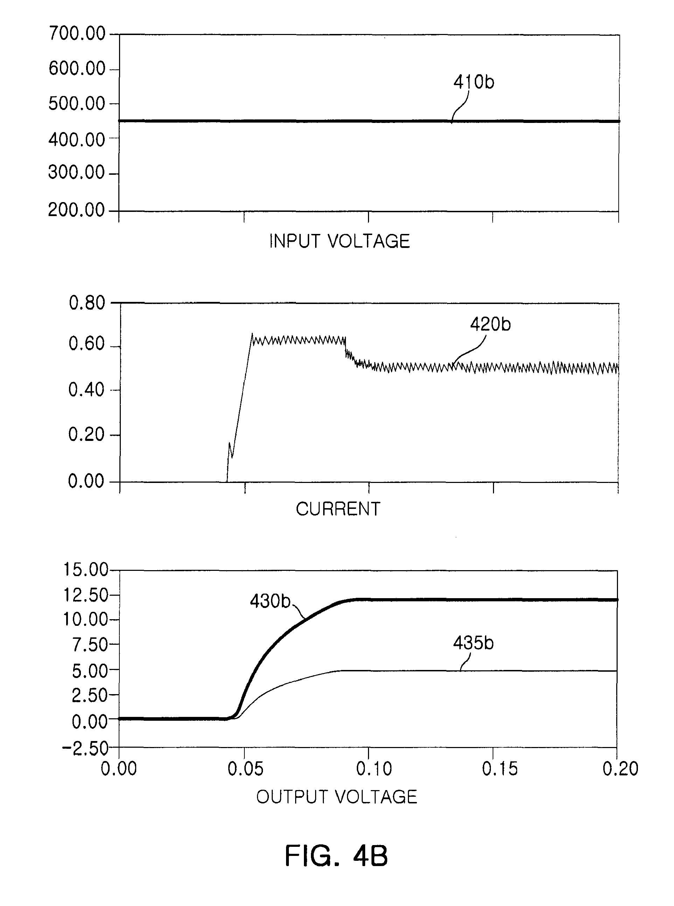

FIGS. 4A and 4B are graphs illustrating a method of operating a power supplying apparatus according to an embodiment of the present invention.

Referring to FIG. 4A, a waveform of input voltages 410a and 415a formed by dividing the DC input signal Vin in the capacitors connected to each other in series is shown in a first graph. In the first graph, when the DC input signal Vin is applied, levels of the first and second input voltages 410a and 415a may be initially unbalanced.

That is, as shown in FIG. 4A, the DC input signal Vin may be distributed as Vc_UP and Vc_DW to the capacitors connected to the input terminals of the flyback converters 230 and 240 and may then be input to the flyback converters 230 and 240. When the switching devices Switch 1 and Switch 2 of the flyback converters 230 and 240 are turned on, the energy may be charged in the primary windings NP1 and NP2 of the transformer 250 by inductance of the primary windings NP1 and NP2. The energy charged in the primary windings NP1 and NP2 may be transferred to the secondary winding NS of the transformer 250 during a period in which the switching devices Switch 1 and Switch 2 are turned off.

In this case, as shown in FIG. 4A, after the DC input signal Vin starts to be applied, when the first input voltage 410a decreases and the second input voltage 415a increases due to any factor, a second input current 425a may significantly increase, and a first input current 420a may decrease. However, since an infinitely large current may not be applied to the transformer 250 due to leakage inductance present in the primary windings NP1 and NP2 of the transformer 250, the voltages applied to the primary windings NP1 and NP2 may be controlled to be auto-balanced. Therefore, as shown in FIG. 4A, when a voltage difference between the first and second input voltages 410a and 415a increases to a predetermined value or more, the first and second input voltages 410a and 415a may be controlled to be auto-balanced due to the leakage inductance present in the primary windings NP1 and NP2 of the transformer 250 to have the same level.

In FIG. 4A, it is assumed that the DC input signal Vin has a level of 900 V and the maximum value of the withstand voltage of the circuit devices of the flyback converters 230 and 240 is lower than 900 V. Therefore, the flyback converters 230 and 240 are connected to each other in series and changes in the currents 420a and 425a and output voltages 430a and 435a according to this connection are shown in second and third graphs.

As described above, after the DC input signal Vin starts to be applied, voltage-unbalancing between the first and second input voltages 410a and 415a may be generated due to a specific factor. However, the voltages applied to the primary windings NP1 and NP2 may be controlled to be auto-balanced due to the leakage inductance present in the primary windings NP1 and NP2 of the transformer 250, such that the currents flowing in the primary windings NP1 and NP2 may also be controlled to be auto-balanced. Referring to the last graph of FIG. 4A, the DC input signal Vin may be converted into DC output signals of 12.5 V and 5.0 V in the respective flyback converters 230 and 240 and then output after a point in time at which the input voltage and current are controlled to be auto-balanced. At an output terminal, DC output signals may appropriately be combined with each other, whereby a desired output voltage Vo may be obtained.

Unlike FIG. 4A, in FIG. 4B, it is assumed that the DC input signal Vin has a level of 450 V and the maximum value of the withstand voltage of the circuit devices of the flyback converters 230 and 240 is higher than 450 V. Therefore, the flyback converters 230 and 240 are connected to each other in parallel, such that an input voltage 410b and a current 420b of the flyback converters 230 and 240 may be represented by a single waveform. The DC output signal may have levels of 12.5 V and 5.0 V in the respective flyback converters 230 and 240, similar to the case of FIG. 4A.

In FIG. 4B, since the flyback converters 230 and 240 are connected to each other in parallel to receive the DC input signal Vin as is, the input voltages of the flyback converters 230 and 240 may be the same as each other and the unbalancing of the currents may not be generated by a leakage inductance component. As shown in first and second graphs in FIG. 4B, in the case in which the DC input signal Vin has a level of 450 V, voltages applied to the input terminals of the respective flyback converters 230 and 240 may also have a level of 450 V. Assuming an ideal condition, since currents flowing in the respective flyback converters 230 and 240 are two divided currents corresponding to 1/2 of the current output by the DC input signal, they may have the same value.

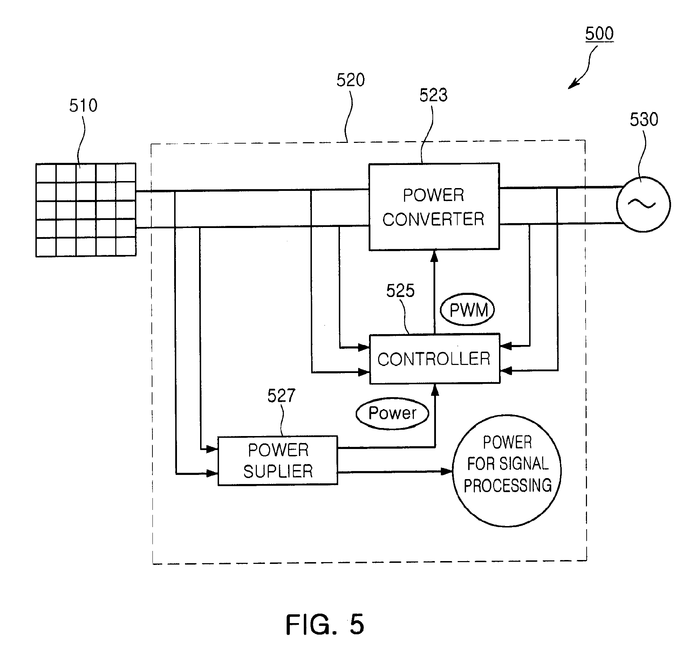

FIG. 5 is a block diagram schematically illustrating a solar power generation system according to an embodiment of the present invention.

Referring to FIG. 5, a solar power generation system 500 according to the present embodiment may include a solar cell array 510 converting solar rays into an electrical signal and outputting a PV signal, a converting circuit unit 520 converting the PV signal and outputting the converted PV signal to a system 530, and the like. The converting circuit unit 520 may include a power converter 523 generating output voltage/current signals, or the like, output to the system 530 using the PV signal, a controller 525 controlling an operation of the power converter 523, and a power supplier 527 generating power required for operating, signal processing, and the like, of the controller 525. The output voltage/current, output through the system 530, may be general home/industrial power supplied to a home, a factory, and the like.

The PV signal generated by the solar cell array 510 may be converted into the output voltage/current transferred to the system 530 through the power converter 523. Therefore, the power converter 523 may include at least one DC to AC converter circuit, and an operation thereof may be controlled by the controller 525. As an example, the controller 525 may output a pulse width modulation (PWM) signal to control an operation of the power converter 523. In order to efficiently control the operation of the power converter 523, the controller 525 may sense a PV signal and a system voltage provided as an input and an output to the power converter 523.

Here, a predetermined signal processing process is required to sense the PV signal and the system voltage. Therefore, the converting circuit unit 520 may include a separate signal processor. The power supplier 527 may generate and supply power required for the operation of the controller 525 and the operation of the signal processor. The power supplier 527 may receive the PV signal generated by the solar cell array 510 as an input to generate an output signal having a level (for example, ±5 to 15 V) appropriate for the power of the controller 525 and the signal processor.

The power supplier 527 may include a plurality of flyback converters generating a DC output signal from the PV signal and a control circuit unit controlling operations of the plurality of flyback converters. For example, an internal configuration and an operation of the power supplier 527 may be the same as those of the power supplying apparatus described with reference to FIGS. 1 through 4. That is, the power supplier 527 may select the scheme of connecting the plurality of flyback converters in series or in parallel according to the level of the PV signal and the maximum value of the withstand voltage of the circuit devices included in the plurality of flyback converters.

As set forth above, according to embodiments of the present invention, a DC output signal is generated by connecting primary windings included in a plurality of flyback converter circuits to each other in series or in parallel according to a level of a DC input signal. Therefore, even in the case that a withstand voltage of a plurality of circuit devices, as well as a switching device, included in the flyback converter circuits, is not designed to be excessively high, the DC output signal is generated from a high level DC input signal, whereby design conditions and limitations may be alleviated and cost competiveness may increase.

While the present invention has been shown and described in connection with the embodiments, it will be apparent to those skilled in the art that modifications and variations can be made without departing from the spirit and scope of the invention as defined by the appended claims.

## Claims

1. A power supplying apparatus comprising:
a power supply unit generating a direct current (DC) input signal;
a main circuit unit including a plurality of flyback converter circuits connected to the power supply unit to generate a DC output signal; and
a control circuit unit controlling an operation of the main circuit unit,
wherein the control circuit unit connects the plurality of flyback converter circuits to each other in series or in parallel according to a level of the DC input signal.

2. The power supplying apparatus of claim 1, wherein the control circuit unit includes a series/parallel circuit converting unit for connecting the plurality of flyback converter circuits to each other in series or in parallel.

3. The power supplying apparatus of claim 1, wherein the control circuit unit compares a withstand voltage range of a plurality of circuit devices included in the plurality of flyback converter circuits with the level of the DC input signal and connects the plurality of flyback converter circuits to each other in series when the level of the DC input signal is higher than a maximum value of the withstand voltage range.

4. The power supplying apparatus of claim 3, wherein the control circuit unit connects the plurality of flyback converter circuits to each other in parallel when the level of the DC input signal is lower than the maximum value of the withstand voltage range.

5. The power supplying apparatus of claim 1, wherein the plurality of flyback converter circuits include a plurality of primary windings and at least one secondary winding.

6. The power supplying apparatus of claim 5, wherein at least part of the plurality of primary windings have the same amount of turns.

7. The power supplying apparatus of claim 6, wherein the plurality of flyback converter circuits are controlled to be current balanced by the at least part of the plurality of primary windings having the same amount of turns.

8. The power supplying apparatus of claim 5, wherein at least one of the plurality of primary windings is operated as a power circuit for executing voltage and current control operations based on the controlling of the control circuit unit and a voltage and a current of a sum signal of DC output signals output from the plurality of flyback converter circuits.

9. A method of operating a power supplying apparatus, the method comprising:
detecting a level of a DC input signal;
comparing the level of the DC input signal with a withstand voltage range of a plurality of circuit devices included in a plurality of flyback converter circuits; and
generating a DC output signal by connecting the plurality of flyback converter circuits to each other in series or in parallel according to a comparison result.

10. The method of claim 9, wherein, in the generating of the DC output signal, the plurality of flyback converter circuits are connected to each other in series when the level of the DC input signal is higher than a maximum value of the withstand voltage range of the circuit devices, thereby generating the DC output signal.

11. The method of claim 9, wherein, in the generating of the DC output signal, the plurality of flyback converter circuits are connected to each other in parallel when the level of the DC input signal is lower than a maximum value of the withstand voltage range of the circuit devices, thereby generating the DC output signal.

12. The method of claim 9, wherein the DC output signal corresponds to a sum signal of a plurality of output signals output from the plurality of flyback converter circuits.

13. The method of claim 12, wherein the plurality of output signals output from the plurality of flyback converter circuits are controlled to be current balanced by a plurality of primary windings included in the plurality of flyback converter circuits having the same amount of turns.

14. The method of claim 9, wherein, in the generating of the DC output signal, the plurality of flyback converter circuits are connected to each other in series or in parallel by a power signal supplied by at least one of a plurality of primary windings included in the plurality of flyback converter circuits, thereby generating the DC output signal.

15. A solar power generation system comprising:
a power converter receiving a PV signal generated by a solar cell array including at least one solar cell as an input signal to generate an output signal;
a controller controlling an operation of the power converter based on at least one of a voltage and a current of the input signal and a voltage and a current of the output signal; and
a power supplier generating power for operating the controller,
wherein the power supplier includes a main circuit unit including a plurality of flyback converter circuits generating a DC output signal from the PV signal and a control circuit unit controlling an operation of the main circuit unit,
the control circuit unit connects the plurality of flyback converter circuits to each other in series or in parallel according to a level of the PV signal.

16. The solar power generation system of claim 15, wherein the power supplier connects the plurality of flyback converter circuits to each other in series when the level of the PV signal is higher than a maximum value of a withstand voltage range of switching devices included in the plurality of flyback converter circuits.

17. The solar power generation system of claim 15, wherein the power supplier connects the plurality of flyback converter circuits to each other in parallel when the level of the PV signal is lower than a maximum value of a withstand voltage range of switching devices included in the plurality of flyback converter circuits.

18. The solar power generation system of claim 15, wherein the plurality of flyback converter circuits include a transformer having a plurality of primary windings and at least one secondary winding, and
at least part of the plurality of primary windings have the same amount of turns.

19. The solar power generation system of claim 18, wherein the plurality of flyback converter circuits are controlled to be current balanced by the at least part of the plurality of primary windings having the same amount of turns.

20. A power supplying apparatus comprising:
a power supply unit generating a DC input signal;
a main circuit unit including a plurality of flyback converter circuits connected to the power supply unit to generate a DC output signal; and
a control circuit unit controlling an operation of the main circuit unit,
wherein the plurality of flyback converter circuits are connected to each other in series.

21. The power supplying apparatus of claim 20, wherein a withstand voltage of a device included in the plurality of flyback converter circuits is lower than a maximum value of a level of the DC input signal.
